Europäisches Patentamt

European Patent Office

Office européen des brevets

(19)

(11) Veröffentlichungsnummer : **0 211 970 B1**

# (12) EUROPÄISCHE PATENTSCHRIFT

(45) Veröffentlichungstag der Patentschrift :
25.05.88

(21) Anmeldenummer : 85109860.8

(22) Anmeldetag : 06.08.85

(51) Int. Cl.⁴ : **B 23 K 26/08**

(54) Vorrichtung zum Verschweissen der Längskante eines Dosenmantels.

(43) Veröffentlichungstag der Anmeldung :
04.03.87 Patentblatt 87/10

(45) Bekanntmachung des Hinweises auf die Patenterteilung : 25.05.88 Patentblatt 88/21

(84) Benannte Vertragsstaaten :
AT BE CH FR GB IT LI LU NL SE

(56) Entgegenhaltungen :
US-A- 4 354 090
US-A- 4 365 136
PATENT ABSTRACTS OF JAPAN, Band 5, Nr. 143 (M-87)[815], 9. September 1981; & JP - A - 56 74393 (TOKYO SHIBAURA DENKI K.K.) 19.06.1981

(73) Patentinhaber : ELPATRONIC AG
Baarerstrasse 117
CH-6300 Zug (CH)

(72) Erfinder : Bersch, Bernhard, Dr.
Flughafenstrasse 2
D-4600 Dortmund 1 (DE)
Erfinder : Jüttner, Heinz
Tählmannstrasse 24
D-4600 Dortmund 12 (DE)
Erfinder : Tenhaven, Ulrich, Dr.
Kleiner Floraweg 22
D-4600 Dortmund 50 (DE)

(74) Vertreter : Hotz, Klaus, Dipl.-El.-Ing. / ETH
c/o SOUDRONIC AG Industriestrasse 35 Postfach 11
CH-8962 Bergdietikon (CH)

## Beschreibung

Die Erfindung betrifft eine Vorrichtung zum Laserstrahlschweißen der stumpf gegeneinander stoßenden Kanten eines zu einem Dosenmantel gebogenen rechteckigen Blechzuschnittes aus oberflächenbeschichteten oder unbeschichtetem Stahl- oder Aluminiumblech mit einer Blechbiegevorrichtung, inneren und äußeren äußerst genauen Führungen des gebogenen Dosenmantels und der zu verschweißenden Kanten, Transportmitteln der Dosenmäntel und mindestens einer auf die zu verschweißende Kantenausgerichteten Laserstrahlschweißvorrichtung, bei der der Laserstrahl auf die Außenseite des Dosenmantels ausgerichtet ist.

Eine solche Vorrichtung ist aus der US-A- 43 54 090 bekannt. Die mit dieser Vorrichtung erzeugten Schweißnähte sind von so schlechter Qualität, daß die Dosen praktisch unbrauchbar sind. Die schlechte Qualität ist darauf zurückzuführen, daß nicht die gesamte Energie des Schweißstrahles das Zusammenschweißen bewirkt. Ein Teil der Energie wird an den blanken Schnittkanten reflektiert und geht somit verloren. Der reflektierende Anteil ist starken Schwankungen unterworfen, weil die Oberflächen der Schnittkanten je nach Luftfeuchtigkeit und Temperatur oder sonstigen Verschmutzungen sich nach dem Schneiden mit dünnen, kaum sichtbaren Oxydschichten überziehen. Diese Oxydschichten bewirken ein unterschiedlich starkes Reflexionsvermögen. Ein einmal auf ein gutes Schweißergebnis eingestellter Strahl stimmt kurze Zeit später bei etwas anderer Oxydschicht nicht mehr. Die dadurch entstehenden Schweißfehler führen im Inneren der Dose bei zu starkem Strahl zu einer durchhängenden Schweißnaht und bei zu schwachem Strahl zu einem nicht verschweißten Spalt.

Ein Spalt hat den Nachteil, daß sich beim Auftragen des Schutzlackes dieser von der scharfen Kante wegzieht. Die Dose ist dann unzureichend gegen Korrosion geschützt. Außerdem reißt die Schweißnaht im Spalt leicht weiter auf, insbesondere wenn bei der weiteren Verarbeitung diese gebördelt wird. Eine durchhängende Schweißnaht führt ebenfalls zu Fehlstellen im Lack und sie stellt auch ein Festigkeitsrisiko dar.

Der Erfindung liegt deshalb die Aufgabe zugrunde, ein Laserstrahlschweißverfahren für die Dosenherstellung zu entwickeln, bei dem diese Nachteile vermieden werden und bei dem die Schweißnaht in der gesamten Dicke gleichmäßig ist, und bei dem die Vorteile der in der US-A- 43 54 090 für die sehr dünnen Bleche und die Massenproduktion beschriebenen genauen Führung der stumpf gegeneinander stoßenden, zu verschweißenden Kanten beibehalten werden.

Diese Aufgabe wird dadurch gelöst, daß zusätzlich eine einen zweiten Laserstrahl auf die Innenseite des Dosenmantels werfende Vorrichtung eingebaut ist, deren außerhalb der Führungen erzeugter Strahl auf einen durch die innere Führung nicht ausgefüllten Teil des Dosenquerschnittes oder in einen Hohlraum der inneren Führung gerichtet ist und außerdem in diesem nicht ausgefüllten Teil oder Hohlraum der inneren Führung ein Spiegel und eine Sammellinse eingebaut sind und in der inneren Führung unterhalb der zu verschweißenden Stelle eine Öffnung vorhanden ist und der Spiegel und die Sammellinse so ausgerichtet sind, daß der Strahl durch die Öffnung auf die zu verschweißende Stelle geworfen wird.

Weiterbildungen der Vorrichtung sind in den Ansprüchen 2 und 3 beschrieben.

Das beidseitige Verschweißen hat den Vorteil, daß die Energie des Laserstrahles an jeder Seite so stark schwanken kann, daß dieser zwischen 50 bis 100 % der Blechdicke verschweißt. Es ist von keinem Nachteil, wenn der mittlere Bereich der Blechdicke von beiden Seiten überlappend zweimal hintereinander verschweißt wird. Der überlappende Bereich fängt die durch das unterschiedliche Reflexionsvermögen entstehenden Schwankungen des Strahles auf.

Die Vorrichtung wird mit Hilfe der Zeichnungen Fig. 1-6 beschrieben.

Es zeigen :

Fig. 1 und 2 die Zuführungsvorrichtung des gebogenen Dosenmant els zur Schweißmaschine,

Fig. 3 die Führung der Kanten des Bleches im Bereich zwischen der Blechbiegevorrichtung bis kurz vor der Schweißmaschine,

Fig. 4 die Einspannung und Führung des Bleches während des Schweißens,

Fig. 5 einen Querschnitt durch die am Dosenmantel 4 innen liegende Schweißstelle,

Fig. 6 die Formstation für die Dosenmäntel 4.

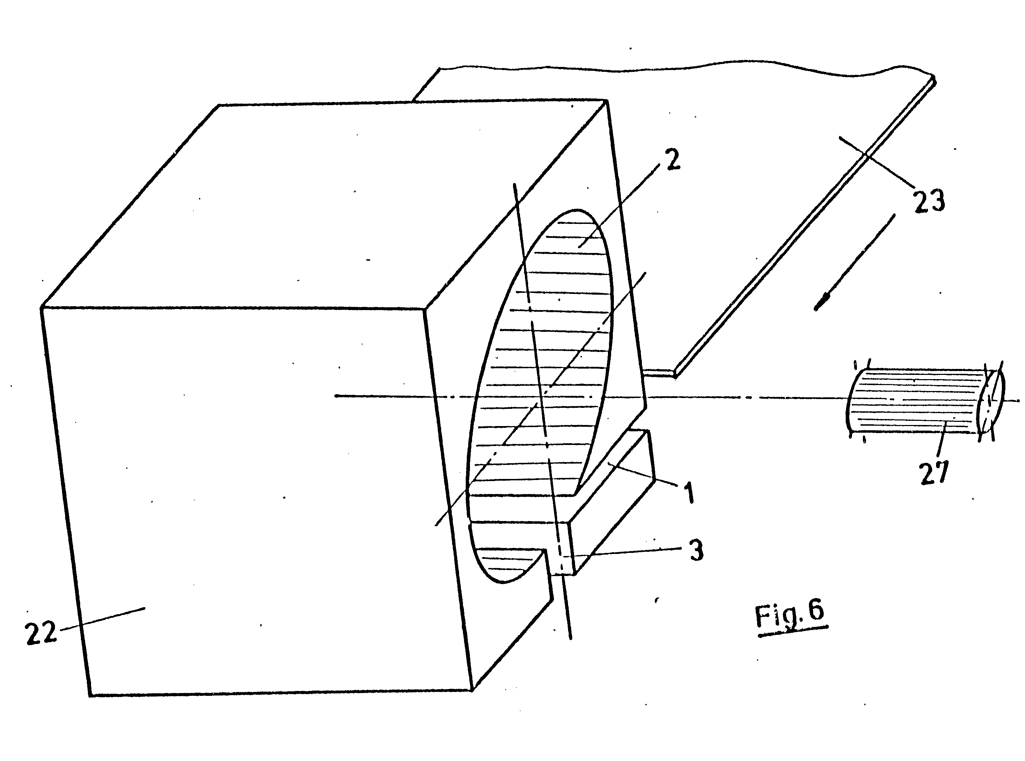

Die zugeschnittenen Blechabschnitte 23 werden in der Formstation 22 nach Fig. 6 seitlich durch einen Schlitz 1 eingeführt und durch den zylinderförmigen Innenraum der Formstation 22 zu einem Dosenmantel 4 gebogen. Die Formstation 22 hat in ihrer Mitte einen in Längsrichtung durchgehenden freien Querschnitt 2 durch den der von der Erzeugungsvorrichtung 27 kommenden Laserstrahl hindurchstrahlt. Die Formstation 22 hat unten einen Schlitz 3. Durch diesen ragen die Mitnehmer 5 einer Transportvorrichtung. Diese fördert den Dosenmantel 4 in Richtung zur Schweißstation 12.

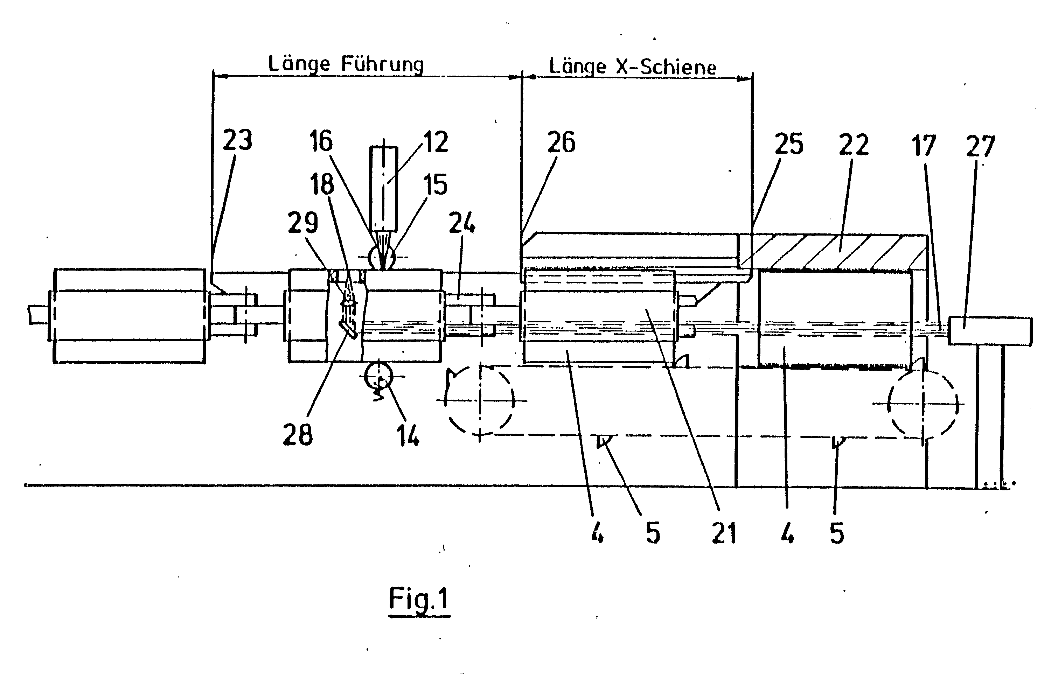

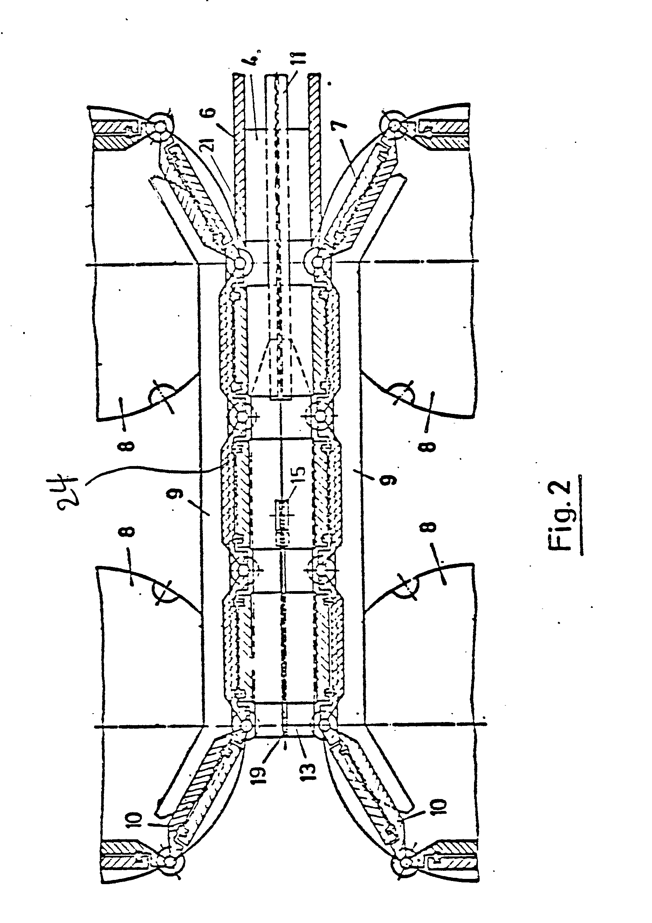

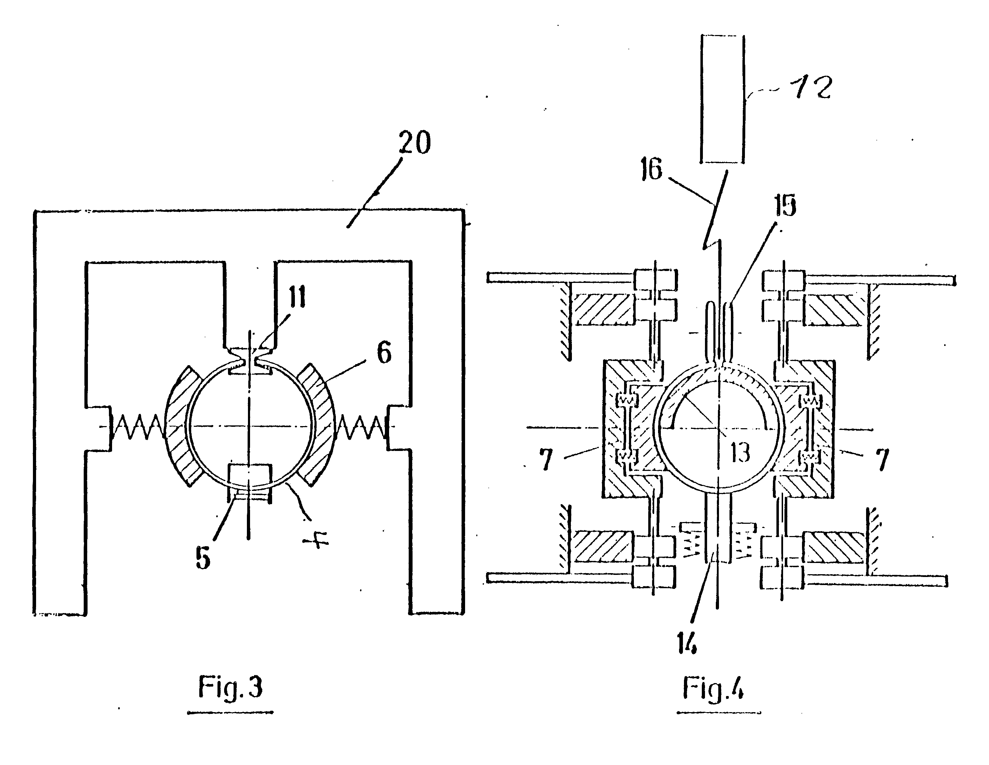

Auf dem ersten Abschnitt des Weges von der Formstation 22 werden die Dosenmäntel 4 entsprechend der Fig. 3 von außen gleitend zwischen den Führungsstücken 6 geführt und von Mitnehmern 5 in Richtung zur Schweißstation bewegt. Das Ende dieses Abschnittes liegt bei der Position 21. Von dort an werden die Dosenmäntel 4 an ihrer Innenfläche gleitend geführt. Den Transport übernimmt jetzt ein besonders ausgebildeter Raupenzug 24 mit federnt gelagerten Backen 7, siehe Fig. 2. Der Raupenzug 24 besteht aus den Kettenrädern 8, den Führungsschienen 9, den Kettengliedern 10 und den Backen 7. Es werden die Schnittkanten der Dosenmäntel 4 zunächst in einer X-Schiene 11 geführt die in der Fig. 1 von der Position 25 bis 26 reicht. Die X-Schiene gewährleistet die genaue Positionierung der zu verschweißenden Schnittkanten bis kurz vor der Schweißstation 12.

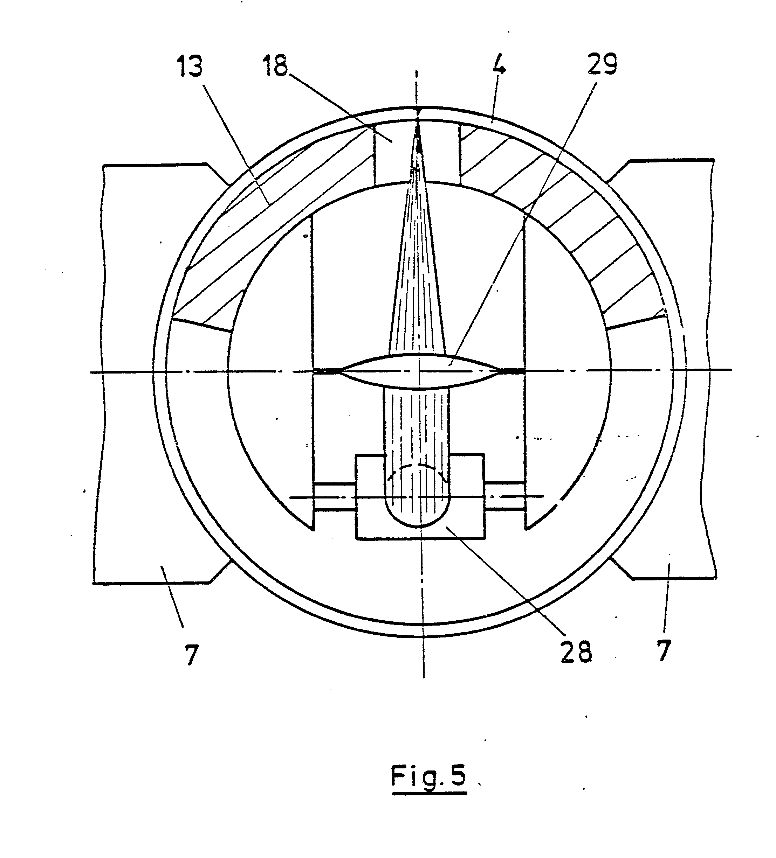

Die Dosenmäntel 4 gleiten während des Schweißens über die innenliegenden Führungsleisten 13 und werden von den seitlich angeordneten als Andrückvorrichtung wirkenden Blechen 7 und einer unten angeordneten Druckrolle 14 vorgespannt, so daß die Schnittkanten satt gegeneinander gepreßt werden und ohne Luftspalt durch die Schweißstation 12 bewegt werden, siehe Fig. 4 und 5. Um im Schweißpunkt Kantenversatz zu vermeiden, werden die Dosenmäntel an den Schnittkanten durch die Doppelrolle 15 auf die Führungsleiste 13 gedrückt. Der Laserstrahl 16 von der Außenseite strahlt genau in die Mitte zwischen die Doppelrolle 15. Der Laserstrahl 17 von der Innenseite geht versetzt zur Außenschweißung durch ein Fenster 18 in der Führungsleiste 13.

Die Führungsleiste 13 besitzt ab dem Schweißfenster 18 im Bereich der Rumpfnaht eine Nute 19 zur Aufnahme der Nahtüberhöhung.

Die Führungsleiste 13 ist am vorderen Teil der X-Schiene befestigt und diese wiederum am Gestell 20. Die Länge der Führungsleiste 13 reicht von der Position 26 bis 23.

Der von unten schweißende Laserstrahl wird in der Erzeugungsvorrichtung 27 erzeugt, durch den Spiegel 28 umgelenkt und durch die Sammellinse 29 auf die Innenfläche des Dosenmantels geworfen.

Es ist auch möglich, beide Laserstrahlen von nur einer Erzeugungsvorrichtung zu erzeugen und den Strahl zu teilen und jeden Teilstrahl zu jeweils einer Schweißstelle zu lenken.

1  Schlitz
2  freier Querschnitt
3  Schlitz
4  Dosenmantel
5  Mitnehmer
6  Führungsstück
7  federnd gelagerte Backe
8  Kettenrad
9  Führungsschiene
10  Kettenglied
11  X-Schiene
12  Schweißstation
13  Führungsleiste
14  Druckrolle
15  Doppelrolle
16  Laserstrahl
17  Laserstrahl
18  Fenster
19  Nute
20  Gestell
21  Position
22  Formstation
23  gerade Blechabschnitte
24  Raupenzug
25  Position
26  Länge der X-Schiene
27  Erzeugungsvorrichtung des Laserstrahles

28  Umlenkspiegel
29  Sammellinse

## Patentansprüche

1. Vorrichtung zum Laserstrahlschweißen der stumpf gegeneinander stoßenden Kanten eines zu einem Dosenmantel (4) gebogenen rechteckigen Blechzuschnittes aus oberflächenbeschichtetem oder unbeschichtetem Stahl- oder Aluminiumblech mit einer Blechbiegevorrichtung (22), inneren und äußeren äußerst genauen Führungen des gebogenen Dosenmantels (4) und der zu verschweißenden Kanten, Transportmitteln der Dosenmäntel und mindestens einer auf die zu verschweißende Kante ausgerichteten Laserstrahlschweißvorrichtung (12), bei der der Laserstrahl (16) auf die Außenseite des Dosenmantels (4) ausgerichtet ist, dadurch gekennzeichnet, daß zusätzlich eine einen zweiten Laserstrahl auf die Innenseite des Dosenmantels (4) werfende Vorrichtung eingebaut ist, deren außerhalb der Führungen erzeugter Strahl (17) auf einen durch die innere Führung nicht ausgefüllten Teil des Dosenquerschnittes oder in einen Hohlraum der inneren Führung gerichtet ist und außerdem in diesem nicht ausgefüllten Teil oder Hohlraum der inneren Führung ein Spiegel (28) und eine Sammellinse (29) eingebaut sind und in der inneren Führung unterhalb der zu verschweißenden Stelle eine Öffnung (18) vorhanden ist und der Spiegel (28) und die Sammellinse (29) so ausgerichtet sind, daß der Strahl (17) durch die Öffnung (18) auf die zu verschweißende Stelle geworfen wird.

2. Vorrichtung nach Anspruch 1, dadurch gekennzeichnet, daß die Vorschubgeschwindigkeit des zu schweißenden Dosenmantels (4) und die Energie der Laserstrahlen so einstellbar sind, daß von jeder Seite des Dosenmantels weniger als die gesamte Blechdicke verschweißt wird.

3. Vorrichtung nach den Ansprüchen 1 und 2, dadurch gekennzeichnet, daß die Laserstrahlen der beiden Seiten in Schweißrichtung etwas versetzt auf die Schweißnaht gerichtet sind.

## Claims

1. An apparatus for the laser-beam welding of the abutting edges of a rectangular sheet-metal blank of surface-coated or uncoated steel or aluminium sheet bent into a can wall (4), having a sheet bending device (22), extremely accurate inner and outer guides for the curved can wall (4) and the edges to be welded, means for conveying the can walls and at least one laser-beam welding device (12) which is aligned on the edge to be welded and wherein the laser beam (16) is aligned on the outside of the can wall (4), characterised in that a device is additionally installed which throws a second laser beam onto the inside of the can wall (4) and of which the beam (17), produced outside the guides, is directed onto a portion of the can cross-section which is not filled by the inner guide or into a cavity in the inner guide and, in addition, a mirror (28) and a collecting lens (29) are installed in this unfilled portion or cavity in the inner guide and there is an opening (18) in the inner guide below the place to be welded and the mirror (28) and the collecting lens (29) are aligned so that the beam (17) is thrown through the opening (18) onto the place to be welded.

2. An apparatus according to Claim 1, characterised in that the feed speed of the can wall (4) to be welded and the energy of the laser beams are adjustable so that less than the total thickness of the sheet is welded from each side of the can wall.

3. An apparatus according to Claims 1 and 2, characterised in that the laser beams at the two sides are directed towards the welding seam somewhat offset in the welding direction.

**Revendications**

1. Appareillage pour soudage par irradiation laser des bords tronqués appliqués l'un contre l'autre d'un flan rectangulaire de feuillard de tôle ou d'aluminium revêtu ou non superficiellement et cintré pour prendre la configuration d'un corps de boîte comprenant un dispositif de cintrage (22), des dispositifs de guidage des pièces intérieurs et extérieurs pour le corps de boîte (4) et les bords à souder, des moyens de transport des corps de boîte et au moins une source laser dont le faisceau (16) est dirigé sur les bords à souder de par la face extérieure du corps de boîte (4), caractérisé en ce qu'en outre un dispositif lui est incorporé pour diriger un second faisceau laser sur la face intérieure du corps de boîte (4) dont le faisceau (17) créé à l'extérieur des dispositifs de guidage est envoyé sur une partie libre de la section droite de la boîte au travers du dispositif de guidage intérieur ou dans une chambre creuse de ce dernier et en ce que de plus un miroir (28) et un condenseur (29) sont placés dans cette partie libre ou cette chambre creuse du dispositif de guidage intérieur et en ce que une ouverture (18) est prévue dans le dispositif de guidage intérieur sous la zone de soudage et en ce que le miroir (28) et le condenseur (29) sont agencés pour que le faisceau (17) atteigne la zone de soudage par l'ouverture (18).

2. Appareillage selon la revendication 1 caractérisé en ce que la vitesse de progression du corps de boîte (4) à souder et l'énergie des faisceaux laser sont réglées de manière que sur chaque face du corps de boîte moins que la totalité de l'épaisseur du flan soit soudée.

3. Appareillage selon la revendication 1 ou 2 caractérisé en ce que les faisceaux laser des deux faces, dans la direction de soudage sont quelque peu décalés sur la ligne de soudure.

Fig.1

Fig. 2

Fig.3

Fig.4

0 211 970

**Fig.5**

4

Fig.6